# EUROPÄISCHE PATENTSCHRIFT

(11) **EP 0 559 641 B1**
(45) Veröffentlichungstag und Bekanntmachung des Hinweises auf die Patenterteilung: **07.09.1994**
(21) Anmeldenummer: 91903296.1
(22) Anmeldetag: 02.02.1991
(51) Int. Cl.: F01N 7/18, F16L 23/028

(54) **Abgaskrümmer**
Exhaust gas manifold
Collecteur d'échappement des gaz

(30) Priorität: 29.11.1990 DE 4038014
(43) Veröffentlichungstag der Anmeldung: 15.09.1993
(73) Patentinhaber: Dr.Ing.h.c. F. Porsche Aktiengesellschaft, 70435 Stuttgart (DE)
(72) Erfinder: BRACHERT, Thomas, D-7135 Wiernsheim (DE); KROTKY, Peter, D-7261 Simmozheim (DE)
(86) Internationale Anmeldenummer: EP9100197
(87) Internationale Veröffentlichungsnummer: WO9209795

(56) Entgegenhaltungen:
- EP-A- 0 399 880
- FR-A- 992 109
- GB-A- 2 200 702
- US-A- 2 081 021

## Beschreibung

Die Erfindung bezieht sich auf eine Rohrleitung nach dem Oberbegriff des Patentanspruchs 1.

Abgaskrümmer für Brennkraftmaschinen bestehen üblicherweise aus einem Grauguß, wobei die Befestigungsflansche an den Enden des jeweiligen Abgaskrümmers aus einem Stück mit letzterem hergestellt sind. Wird dieser Abgaskrümmer zum Ausgleich von Fertigungstoleranzen auf der einem Zylinderkopf abgekehrten Seite mit einer nachgeschalteten Abgasleitung über eine sphärische Dichtung verbunden und Abgaskrümmer und Abgasleitung mittels paralleler Befestigungsflansche und Schrauben befestigt, wird zumindest der Befestigungsflansch des Abgaskrümmers bei entsprechenden Toleranzlagen der Abgasanlage in erheblichem Umfang auf Biegung beansprucht. Diese Beanspruchungen können zum Bruch des Befestigungsflansches führen.

In der EP-A- 0 399 880 wird eine Verbindung von zwei Abgasleitungsabschnitten gezeigt, wobei jeder Abschnitt in dem einander zugekehrten Endbereich mit einem Befestigungsflansch versehen ist. Zwischen den Befestigungsflanschen, die fest am jeweiligen Abschnitt angeordnet sind, wirken Befestigungsschrauben.

Aufgabe der Erfindung ist es, einen Abgaskrümmer-Befestigungsflansch, der mit einem weiteren Befestigungsflansch einer Abgasleitung mittels Schrauben verbunden ist, so zu gestalten, daß er den auftretenden Biegebeanspruchungen gut standhält.

Erfindungsgemäß wird diese Aufgabe durch die kennzeichnenden Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß der zweite Befestigungsflansch des Abgaskrümmers ein getrennt hergestelltes Flanschteil ist, wodurch Biegebeanspruchungen, hervorgerufen z.B. durch Winkeltoleranzen zwischen dem Abgaskrümmer und der Abgasleitung, aufgrund der sphärischen Dichtung zwischen letzteren funktionsgerecht aufgenommen werden. Dieses Flanschteil, das beispielsweise aus warmfestem Stahl bestehen kann, stützt sich formschlüssig am Ringelement ab. Eine wirkungsvolle Abstützung wird über Konusse erreicht, die am Flanschteil und am Ringelement vorgesehen sind. Zur einfachen Montage des Flanschteils besteht das Ringelement aus mehreren, getrennt hergestellten Ringabschnitten. Darüber hinaus ist der kleinste Innendurchmesser im Konus des Flanschteils größer als der Außendurchmesser des Anschlags.

In der Zeichnung ist ein Ausführungsbeispiel dargestellt, das nachstehend näher beschrieben ist.
Es zeigt
- Fig. 1: eine schematisch ausgeführte Brennkraftmaschine mit einem Abgaskrümmer und einer Abgasleitung,
- Fig. 2: eine Einzelheit X der Fig. 1 im Schnitt und größerem Maßstab,
- Fig. 3: einen Schnitt nach der Linie II-II der Fig. 1.

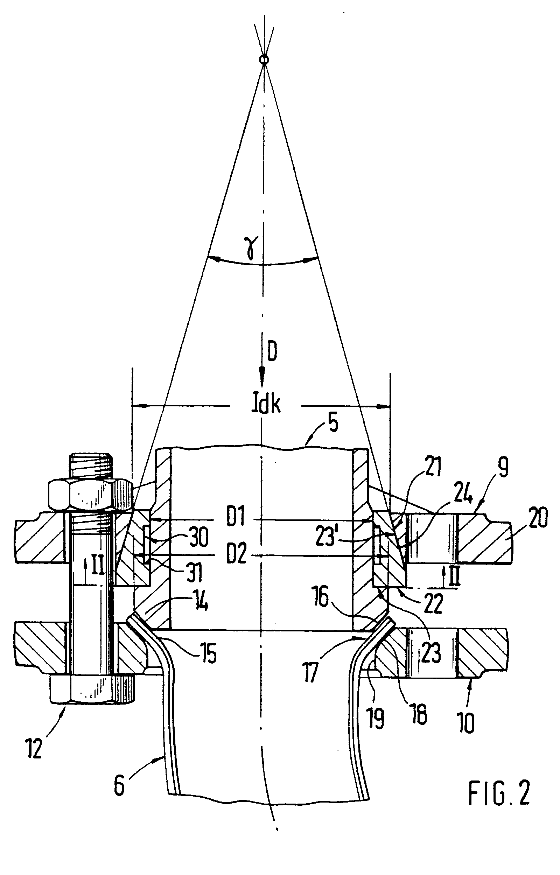

Eine in Fahrzeuglängsrichtung A-A eines nicht näher gezeigten Kraftfahrzeugs eingebaute mehrzylindrige Brennkraftmaschine 1 - in Reihenbauweise - umfaßt einen Zylinderkopf 2 mit mehreren Auslaßkanälen 3 und einer Abgasanlage 4. Die Abgasanlage wird gebildet durch einen Abgaskrümmer 5 und eine Abgasleitung 6, die mit einem Katalysator 7 verbunden ist. Der Abgaskrümmer 5 ist an einem Ende B mit einem ersten Befestigungsflansch 8 (weil es sich um eine mehrzylindrige Brennkraftmaschine handelt, gibt es mehrere Flansche 8) an dem Zylinderkopf 2 unter Vermittlung von Schrauben gehalten. Der erste Befestigungsflansch 8 wirkt nach Art einer Flachdichtung mit dem Zylinderkopf 2 zusammen und ist aus einem Stück mit dem aus einer Graugußlegierung bestehenden Abgaskrümmer 5 hergestellt. Der Abgaskrümmer 5 ist am anderen Ende C mit einem zweiten Befestigungsflansch 9 versehen, der mit einem weiteren Befestigungsflansch 10 der Abgasleitung 6 unter Vermittlung von Schrauben 11, 12 verbunden ist. Der Abgaskrümmer 5 und die Abgasleitung 6 wirken über eine Dichtung 13 zusammen, die sphärische Abschnitte 14, 15 (Fig. 2) aufweist.

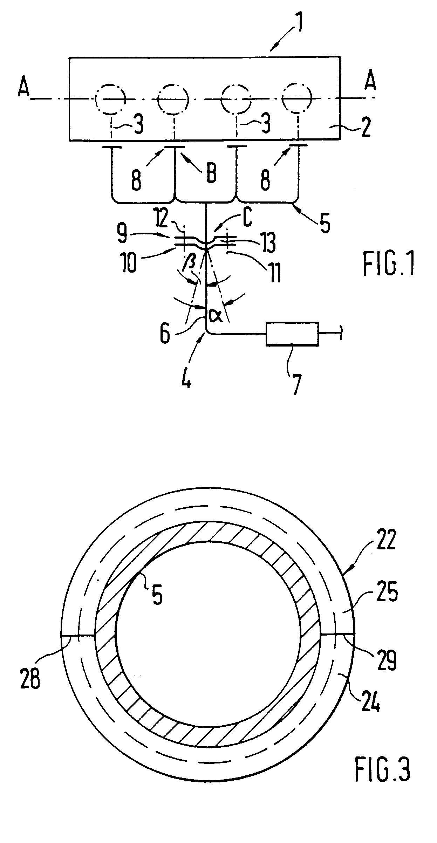

Der Abschnitt 14 des Abgaskrümmers 5 ragt mit einer balligen Anfasung 16 in eine Aufweitung 17 des Abschnitts 15 der Abgasleitung 6 hinein, die im Ausführungsbeispiel ein doppelwandiges Stahlrohr ist. Der Befestigungsflansch 10, der ein getrennt von der Abgasleitung 6 hergestelltes, plattenartiges Bauteil ist, stützt sich mit einer Anfasung 18, die in eine die Abgasleitung 6 umgebende Öffnung 19 eingearbeitet ist, an der Aufweitung 17 ab. Durch die Art der Dichtung 13 können Toleranzen, wie sie durch die Winkel α und β in Fig. 1 angegeben sind, ausgeglichen werden.

Der zweite Befestigungsflansch 9 des Abgaskrümmers 5 ist ein getrennt von letzterem hergestelltes, plattenartiges Flanschteil 20, das sich mit einer Öffnung 21 an einem Ringelement 22 formschlüssig abstützt. Das Ringelement 22 umgibt anliegend einen Außendurchmesser D1 des Abgaskrümmers 5 und ist in axialer Richtung D gegen einen Anschlag 23 von letzterem gespannt. Der Außendurchmesser D2 des Anschlags 23 ist größer als der Außendurchmesser D1.

Das Flanschteil 20 und das Ringelement 22 wirken über Konusse 23', 24 zusammen, die sich in axialer Richtung D - Strömungsrichtung der Abgase - erweitern und einen Winkel γ einschließen.

Gemäß Fig. 3 besteht das Ringelement 22 aus zwei Ringabschnitten 24, 25, die an jeweils radialen Enden 28 und 29 zusammengesetzt sind. Es besteht auch die Möglichkeit, das Ringelement 22 aus mehr als zwei Ringabschnitten zu bilden.

Zwischen dem Abgaskrümmer 5 und dem Ringelement 22 ist eine Kammer 30 vorgesehen, durch die der Wärmeübergang vom Abgaskrümmer 5 zum Ringelement 22 reduziert wird. Die Kammer 30 wird durch eine Ausnehmung 31 im Ringelement 22 gebildet.

Damit das Flanschteil 20 auf einfache Weise in seine Einbaulage gebracht werden kann, ist der kleinste Innendurchmesser Idk größer als der Außendurchmesser D2 des Anschlags 23.

Bei hohen Beanspruchungen der Befestigungsflansche 9 und 10 können diese wie auch das Ringelement 23 aus einem warmfesten Stahl bestehen.

## Patentansprüche

1. Abgaskrümmer (5) einer Brennkraftmaschine (1), der an einem Ende (3) einen ersten Bef4estigungsflansch (8) zur Befestigung an einem Zylinderkopf (2) der Brennkraftmaschine (1) und an einem anderen Ende (C) einen zweiten Befestigungsflansch (9) umfasst, der mit einem weiteren Befestigungsflansch (10) einer Abgasleitung (6) über Schrauben (11, 12) verbunden ist, wobei der Abgaskrümmer (5) und die Abgasleitung (6) über eine sphärische Abschnitte (14, 15) aufweisende Dichtung (13) zusammenwirken, dadurch gekennzeichnet, daß der zweite Befestigungsflansch (9) ein getrennt von dem Abgaskrümmer (5) hergestelltes Flanschteil (20) ist das sich formschlüssig an einem Ringelement (22) abstützt, welches das Ende (C) des Abgaskrümmers (5) umgibt und einen Innendurchmesser aufweist, der dem Außendurchmesser (D1) des Abgaskrümmers (5) entspricht. und in axialer Richtung (D) gegen einen am Ende (C) angebrachten Anschlag (23) des Abgaskrümmers (5) anliegt.

2. Abgaskrümmer nach Anspruch 1, dadurch gekennzeichnet, daß das Flanschteil (20) und das Ringelement (22) über Konusse (23', 24) zusammenwirken, die einen sich in axialer Richtung (D) erweiternden Winkel ( γ) einschließen.

3. Abgaskrümmer nach den Ansprüchen 1 und 2, dadurch gekennzeichnet, daß das Ringelement (22) durch mehrere getrennt hergestellte Ringabschnitte (24, 25) gebildet ist.

4. Abgaskrümmer nach Anspruch 3, dadurch gekennzeichnet, daß die Ringabschnitte (24, 25) an radialen Enden (28, 29) zusammengesetzt sind.

5. Abgaskrümmer nach einem oder mehreren der vorangehenden Ansprüche, dadurch gekennzeichnet, daß zwischen dem Abgaskrümmer (5) und dem Ringelement (22) eine Kammer (30) vorgesehen ist.

## Claims

1. An exhaust manifold (5) of an internal-combustion engine (1), provided at one end (3) with a first connecting flange (8) for connecting to a cylinder head (2) of the internal-combustion engine (1) and at another end (C) with a second connecting flange (9) connected to a further connecting flange (10) of an exhaust pipe (6) by way of bolts (11, 12), wherein the exhaust manifold (5) and the exhaust pipe (6) cooperate by way of a seal (13) having spherical portions (14, 15), **characterized in that** the second connecting flange (9) is a flange part (20) produced separately from the exhaust manifold (5) and supported on an annular member (22) with positive locking, the annular member (22) surrounding the end (C) of the exhaust manifold (5) and having an internal diameter which corresponds to the external diameter (D1) of the exhaust manifold (5), and resting in the axial direction (D) against a stop (23) of the exhaust manifold (5) attached to the end (C).

2. An exhaust manifold according to Claim 1, **characterized in that** the flange part (20) and the annular member (22) cooperate by way of cones (23', 24) forming an angle (γ) increasing in the axial direction (D).

3. An exhaust manifold according to Claims 1 and 2, **characterized in that** the annular member (22) is formed by a plurality of annulus portions (24, 25) produced separately.

4. An exhaust manifold according to Claim 3, **characterized in that** the annulus portions (24, 25) are joined at radial ends (28, 29).

5. An exhaust manifold according to one or more of the preceding Claims, **characterized in that** a chamber (30) is provided between the exhaust manifold (5) and the annular member (22).

## Revendications

1. Collecteur d'échappement des gaz (5) d'un moteur à combustion interne (1), qui comporte à une extrémité (3), une première bride de fixation (8) destinée à la fixation sur une culasse (2) du moteur (1) et à une autre extrémité (C), une seconde bride de fixation (9), qui est reliée à une autre bride de fixation (10) d'un tuyau d'échappement des gaz (6), par des vis (11, 12), le collecteur d'échappement des gaz (5) et le tuyau d'échappement des gaz (6) coopérant, par une garniture d'étanchéité (13), présentant des portions (14, 15) sphériques, caractérisé en ce que la seconde bride de fixation (9) est une bride (20), réalisée séparément du collecteur (5), qui prend appui par concordance de forme contre un élément annulaire (22), lequel entoure l'extrémité (C) du collecteur (5) et présente un diamètre intérieur, qui correspond au diamètre extérieur (D1) du collecteur (5), et s'applique, dans la direction axiale (D), contre une butée (23), placée à l'extrémité (C), du collecteur (5).

2. Collecteur d'échappement des gaz selon la revendication 1, caractérisé en ce que la bride (20) et l'élément annulaire (22) coopèrent par des cônes (23', 24) qui forment un angle (γ) s'élargissant dans la direction axiale (D).

3. Collecteur d'échappement des gaz selon les revendications 1 et 2, caractérisé en ce que l'élément annulaire (22) est formé par plusieurs portions annulaires (24, 25) réalisées séparément.

4. Collecteur d'échappement des gaz selon la revendication 3, caractérisé en ce que les portions annulaires (24, 25) sont assemblées à des extrémités radiales (28, 29).

5. Collecteur d'échappement des gaz selon une ou plusieurs des revendications précédentes, caractérisé en ce qu'une chambre (30) est prévue entre le collecteur (5) et l'élément annulaire (22).
